# EUROPEAN PATENT APPLICATION

(11) **EP 2 266 392 A1**
(43) Date of publication of application: **29.12.2010**
(21) Application number: 09163379.2
(22) Date of filing: 22.06.2009
(51) Int. Cl.: A01K 1/04, A01K 1/06, A01K 27/00

(54) **Pet restraint device**

(71) Applicant: Wang, Steve Y., Taipei City, Taiwan (CN)
(72) Inventor: Wang, Steve Y., Taipei City, Taiwan (CN)
(74) Representative: Becker, Eberhard

(57) **Abstract**

A pet restraint device (1) comprises a suction device (11), a hollow case (12), a driving element (13), and a connecting part (14). The suction device (11) includes a suction disc (111) and a tractor (113). The tractor (113) is connected to the central top of the suction disc (111) for moving the suction disc upward or downward to attach to or detach from a contact surface. The hollow case (12) is located above the suction device (11) and is provided centrally with a hole (121). The tractor (113) of the suction device (11) is inserted through the hole (121) and extends above the hollow case (12). The driving element (13) is located above the hollow case (12) and is pivotally connected with the tractor (113) of the suction device (11) for moving the tractor upward and fixing the tractor after it is moved upward. The connecting part (14) is provided on the case and is connected with a pet leash (2) to retrain a pet. Therefore, the connecting part can be connected with a pet leash (2) to restrain a pet when the driving element moves upward and fix the tractor to have the suction disc (111) attached and positioned to the contact surface.

## Description

### Technical Field

The present invention relates to a pet restraint device and, more particularly, to a pet restraint device that can be easily attached to a desired indoor or outdoor place for a pet owner to restrain her or his pet.

### Background

People enjoy keeping pets in order to give spice to their lives to alleviate the heavy stress and strains in modem live. Accordingly, keeping pets has become one entertainment of many families, where dogs are the most popular animals among pets to be kept. Because dogs have active character, their owners often need to walk them outside in order to provide them with relatively ample space to play around. Therefore, walking dogs becomes a routine habit for many pet owners.

When walking their dogs outside, people have to take some preventive measures to retrain their dogs, such as putting leashes on their dogs, since dogs are prone to excitement when being stimulated and may scurry around or even consequently frighten passersby. When owners walk their dogs outside for a while, they may feel tired and need to find a place to tie the leashes for a short rest. However, owners cannot take a short rest until they can find a proper fixing object to tie the leashes there onto. Moreover, although more restaurants allow their customers to bring their pets together, there is usually no fixing object to be provided in such restaurants. Therefore, customers who bring pets may be in trouble keeping a close watch on and taking care of their pets while they are dining.

Furthermore, pet dogs may rush around at home when they are getting excited and this behavior may cause damage to furniture. However, it is unusual to provide a fixing object at home for an owner to tie the leash there onto. Therefore, it may be difficult for the owner to restrain his or her dog at home.

In order to overcome above shortcomings, inventor had the motive to study and develop the present invention. After hard research and development, the inventor provides a pet restraint device for an owner to restrain his or her pet at a desired place by the roadside when walking the pet or to restrain the pet within a proper area at home in order to prevent from the damage done to furniture.

### Summary of the disclosure

An object of the present invention is to provide a pet restraint device that can be attached to a predetermined location via a suction device and connected with a pet leash via a connecting part, so that it facilitates owners to restrain their pets.

In order to achieve above object, the present invention provides a pet restraint device comprising a suction device, a hollow case, a driving element, and a connecting part. The suction device includes a suction disc and a tractor. The tractor is connected to the central top of the suction disc for moving the suction disc upward or downward to attach to or detach from a contact surface. The hollow case is located above the suction device and is provided centrally with a hole. The tractor is inserted through the hole and extends above the hollow case. The driving element is located above the hollow case and is pivotally connected with the tractor of the suction device for moving the tractor upward or downward and for fixing or releasing the tractor after the tractor is moved upward. The connecting part is provided on the case. When the driving element moves the tractor upward and fixes its position, the central portion of the suction disc is moved away from the contact surface while the peripheral portion thereof is fastened and positioned onto the contact surface. At this moment, the connecting part can be connected with a pet leash to retrain a pet.

The following detailed description, given by way of examples or embodiments, will best be understood in conjunction with the accompanying drawings.

### Brief Description of the Drawings

Fig. 1 shows an exploded perspective view of a preferred embodiment of the present invention.

Fig. 2 shows a perspective view of the preferred embodiment of the present invention.

Fig. 3 shows a perspective view of the preferred embodiment of the present invention from another angle.

Fig. 4A shows a sectional view of the preferred embodiment of the present invention.

Fig. 4B is a schematic view showing the use of the preferred embodiment of the present invention.

Fig. 5 shows a perspective view of the preferred embodiment of the present invention in use.

Fig. 6 shows a perspective view of another preferred embodiment of the present invention.

Fig. 7 shows a perspective view of another preferred embodiment of the present invention.

### Detailed Description

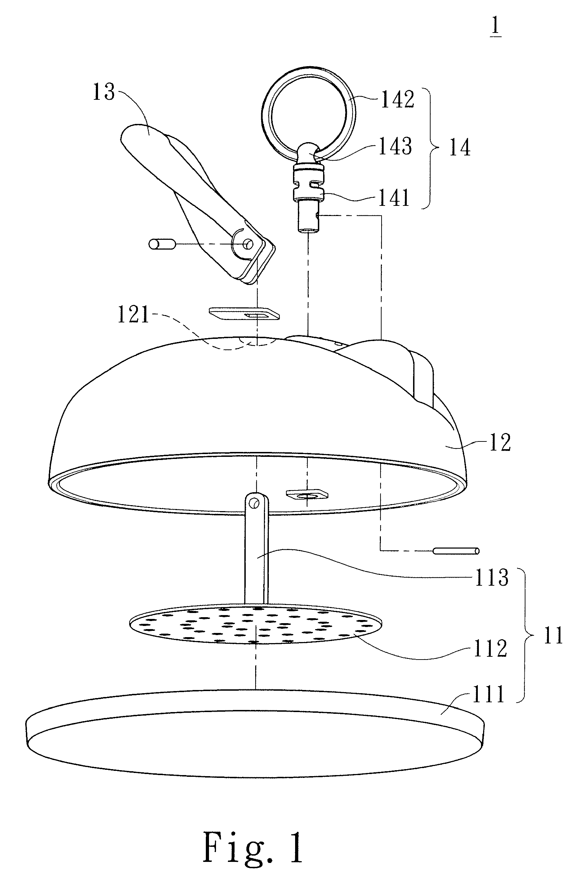

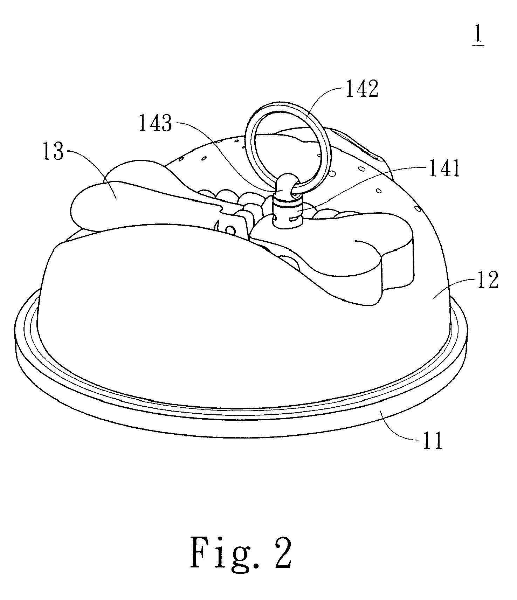

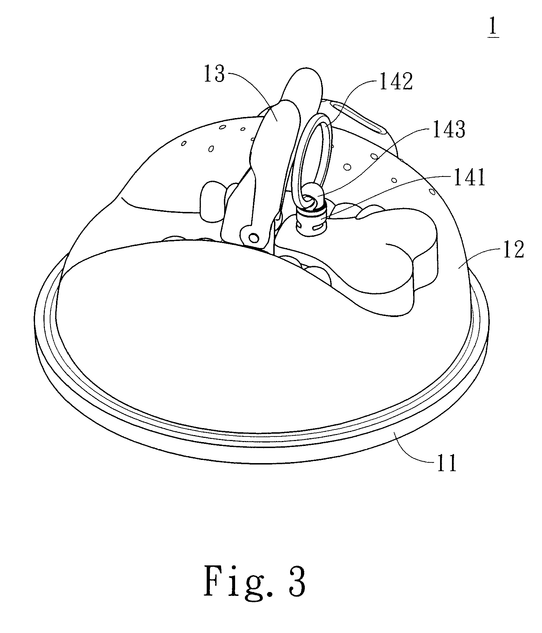

Please refer to Figs. 1 to 3 that show a preferred embodiment of a pet restraint device 1 of the present invention. The pet restraint device 1 comprises a suction device 11, a hollow case 12, a driving element 13, and a connecting part 14.

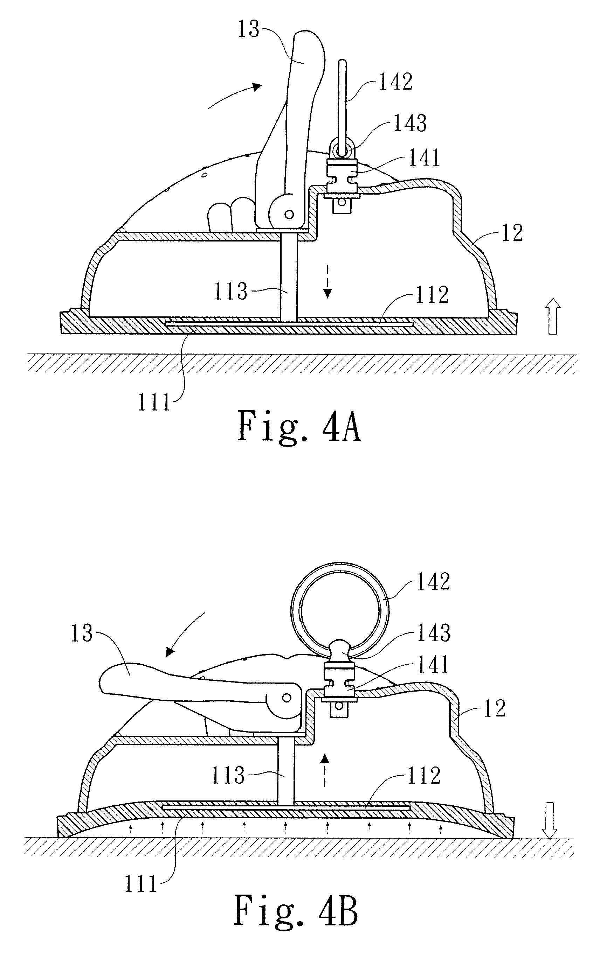

The suction device 11 includes a suction disc 111, a pulling element 112, and a tractor 113. The suction disc 111 is a soft rubber disc. The pulling element 112 is connected to the central top of the suction disc 111. The tractor 113 is connected to the central top of the pulling element 112 for moving the pulling element 112 and the suction disc 111 upward or downward to have the central portion of the suction disc 111 be close to or away from a contact surface in order to have the suction disc 111 attached to or detached from the contact surface. Moreover, the pulling element 112 is made by hard material that is not easily deformed. Therefore, the pulling element 112 can be used to exert pressure on the central portion of the suction disc 111 when being pressed by the tractor 113 that is moved downward (as shown in Fig.4A).

The hollow case 12 is located above the suction device 11 and the peripheral portion of the hollow case 12 is closely attached with the peripheral portion of the suction disc 111. Besides, the hollow case 11 is centrally provided with a hole 121. The tractor 113 is inserted through the hole 121 and extends out of the hollow case 12.

The driving element 13 is located above the hollow case 12 and is pivotally connected with the tractor 113 of the suction device 11 for moving the tractor 113 upward or downward and for fixing or releasing the position of the tractor 113 after the tractor 113 is moved upward, and the suction disc 111 is moved accordingly to attach to or detach from the contact surface. Moreover, when the driving element 13 is in a position vertical to the suction disc 111, the tractor 113 can be moved upward by pressing the driving element 13 (as shown in Fig.4B). When the driving element 13 is turned to be horizontal to the suction disc 111, the position of the tractor 113 is fixed and the suction disc 111 is fastened to the contact surface.

The connecting part 14 includes a rotary shaft 141 and a rotary ring 142. The bottom end of the rotary shaft 141 is fixed on the hollow case 12 and the top end of the rotary shaft 141 is provided with a rotatable fixed seat 143. The fixed seat 143 is provided with a hole and is connected with the rotary shaft 141. The rotary ring 142 can be inserted through the hole of the fixed seat 143 and thus is rotatable freely. Besides, the rotary shaft 141 and the rotary ring 142 are made of metal material that is not easily deformed.

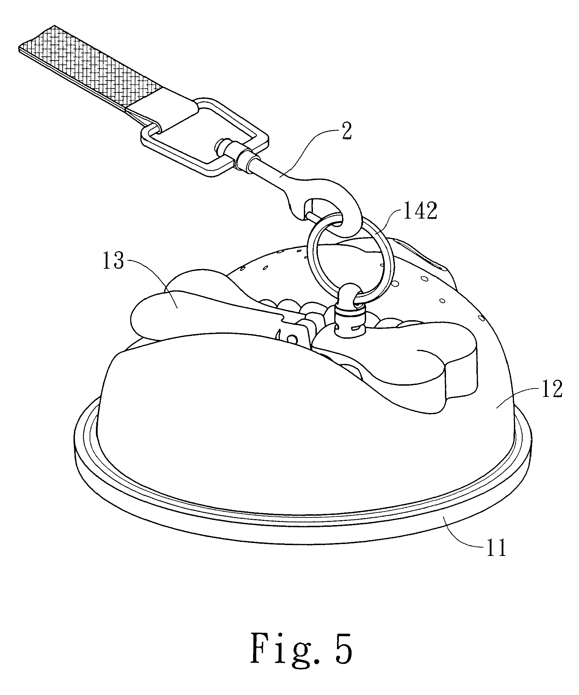

In practice, put the pet restraint device onto the contact surface of a desired location to form a size-variable space between the suction disc and the contact surface. After that, press the driving element from its originally vertical position to horizontal position to move upward the tractor and then fix the tractor's position after it is moved upward. By this way, the central portion of the suction disc is moved away from the contact surface while the peripheral portion thereof is fastened to the contact surface. After the pet restraint device is fastened onto the contact surface, as shown in Fig.5, one end of a pet leash 2 can be tied to the rotary ring of the connecting part. Therefore, a pet can be restrained within a certain range around the pet restraint device. Because the fixed seat on the top of the rotary shaft is rotatable, the end of the pet leash 2 tied to the rotary ring can be rotated simultaneously when the pet runs around the pet restraint device so as to prevent the pet leash 2 from entwining around the rotary shaft 141.

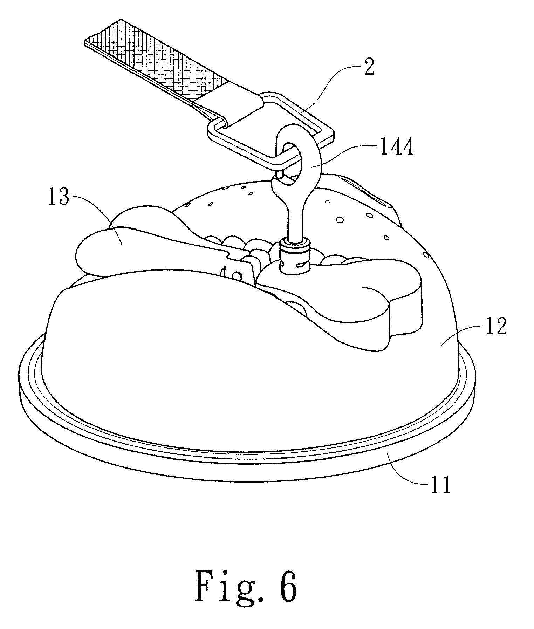

In practice, as shown in Fig.6, another form of the connecting part 14 is shown. The connecting part 14 includes a rotary shaft 141 and a hook buckle 144. The rotary shaft 141 is fixed on the hollow case 12. The hook buckle 144 is provided on the top of the rotary shaft 141 for buckling the hand-held end 21 of the pet leash 2.

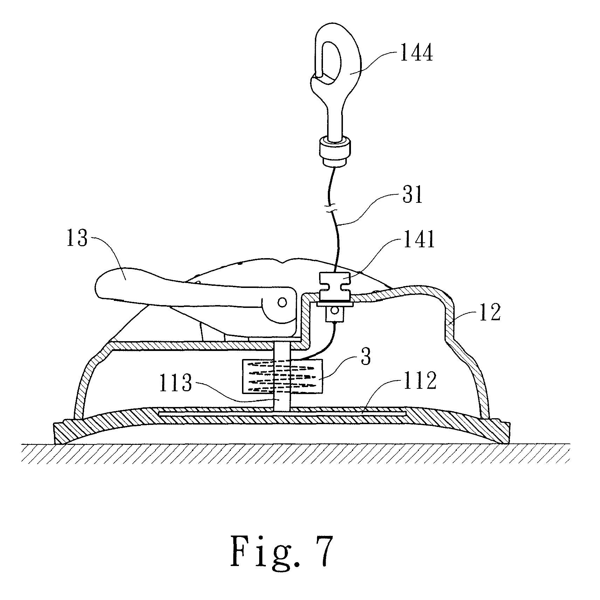

In practice, as shown in Fig.7, the hollow case 12 is further provided with a winder 3 and a rope 31 therein. The rope 31 is made by soft plastic material and is wound around the winder 3 when not in use. One end of the rope 31 is fixed on the winder 3 while another end thereof passes through the rotary shaft 141 and is connected to the bottom of the hook buckle 144 on the top of the rotary shaft 141. In this way, by pulling out the rope and buckling the hook buckle 144 to a collar of a pet, the function of a conventional leash can be achieved.

Therefore, the present invention has following advantages:

1. According to the present invention, when walking a pet outdoors, the owner of the pet can easily fasten the pet restraint device to a suitable location via the suction device and thus can take a rest when feeling tired.

2. The pet restraint device of the present invention is applicable at home. the owner can fasten the pet restraint device at any suitable location to restrain his or her pet in order to prevent the pet from doing damage to the things at home when the pet rushes around.

3. According to the present invention, when an owner goes out for a dinner with his or her pet, the owner can attach the pet restraint device onto a suitable location and then tie the pet leash to the pet restraint device. Consequently, the owner can easily restrain his or her pet without keeping a close look on the pet and enjoy a meal.

4. The pet restraint device according to the present invention can be used in company with a conventional pet leash for an owner to restrain her or his pet when going outdoors to walk the pet. This function makes the pet restraint device more useful.

As disclosed in the above description and attached drawings, the present invention can provide a pet restraint device that can be attached to a suitable position and connected with a pet leash. An owner can restrain his or her pet easily no matter when the owner is in company with the pet at home or walks the pet outdoors. It is new and can be put into industrial use.

Although the embodiments of the present invention have been described in detail, many modifications and variations may be made by those skilled in the art from the teachings disclosed hereinabove. Therefore, it should be understood that any modification and variation equivalent to the spirit of the present invention be regarded to fall into the scope defined by the appended claims.

## Claims

1. A pet restraint device, comprising:
a suction device, including a suction disc and a tractor, where the tractor is connected to the central top of the suction disc for moving the suction disc upward or downward to attach to or detach from a contact surface;
a hollow case, located above the suction device and provided centrally with a hole, where the tractor of the suction device is inserted through the hole and extends above the hollow case;
a driving element, located above the hollow case and pivotally connected with the tractor of the suction device, for moving the tractor upward or downward and for fixing or releasing the tractor after the tractor is moved upward; and
a connecting part, provided on the case and connected with a pet leash to retrain a pet.

2. The pet restraint device as claimed in claim 1, wherein the suction device further includes a pulling element, where one side of the pulling element is connected to the top of the suction disc while the other side thereof is connected with the tractor.

3. The pet restraint device as claimed in claim 1, wherein the connecting part includes a rotary shaft and a rotary ring, where the rotary shaft is fixed on the hollow case and the rotary ring is provided on the top of the rotary shaft.

4. The pet restraint device as claimed in claim 3, wherein the top of the rotary shaft is pivotally disposed with a rotatable fixed seat.

5. The pet restraint device as claimed in claim 3, wherein the rotary shaft and the rotary ring are made of metal material.

6. The pet restraint device as claimed in claim 1, wherein the connecting part includes a rotary shaft and a hook buckle, where the rotary shaft is fixed on the hollow case and the hook buckle is provided on the top of the rotary shaft.

7. The pet restraint device as claimed in claim 1, further comprising a winder and a rope, where the winder is provided within the hollow case; the rope is winded around the winder and one end thereof is connected to the connecting part.
